# EUROPÄISCHE PATENTSCHRIFT

(11) **EP 3 420 806 B1**
(45) Veröffentlichungstag und Bekanntmachung des Hinweises auf die Patenterteilung: **23.02.2022**
(21) Anmeldenummer: 18170536.9
(22) Anmeldetag: 03.05.2018
(51) Int. Cl.: A01F 15/07

(54) **UMHÜLLUNGSEINRICHTUNG ZUR UMHÜLLUNG EINES BALLENS MIT EINEM HÜLLMATERIAL, BALLENPRESSE UND VERFAHREN**
WRAPPING DEVICE FOR WRAPPING A BALE WITH A WRAPPING MATERIAL, A BALE PRESS AND METHOD
DISPOSITIF D'ENROBAGE PERMETTANT L'ENROBAGE D'UNE BALLE AVEC UN MATÉRIAU D'ENROBAGE, PRESSE À BALLE ET PROCÉDÉ

(30) Priorität: 27.06.2017 DE 102017210849
(43) Veröffentlichungstag der Anmeldung: 02.01.2019
(73) Patentinhaber: Deere & Company, Moline, IL 61265 (US)
(72) Erfinder: Gresset, Pascal, 68163 Mannheim (DE); Delphigue, Didier, 68163 Mannheim (DE); Perrotin, Frederic, 68163 Mannheim (DE)
(74) Vertreter: Reichert, Christian

(56) Entgegenhaltungen:
- WO-A1-2010/112373
- CA-C- 1 313 465
- DE-A1- 10 026 066
- DE-A1-102004 023 701
- US-A1- 2014 352 263
- US-A1- 2016 280 404

## Beschreibung

Die vorliegende Erfindung betrifft eine landwirtschaftliche Ballenpresse nach dem Oberbegriff von Anspruch 1 und ein Verfahren zur Umhüllung eines Ballens mit einem Hüllmaterial Anspruch 5.

Bekannte Umhüllungseinrichtungen werden an Ballenpressen eingesetzt, um einen in einem Pressraum der Ballenpresse gebildeten Rundballen mit einem Hüllmaterial, beispielsweise einem Netz, einer Folie oder einem ähnlichen, gegebenenfalls auch semipermeablen, atmungsaktiven und/oder wasserabweisenden Material zu umhüllen, bevor dieser nach Abschluss der Umhüllung von der Ballenpresse abgegeben und danach auf dem Untergrund abgelegt oder an eine weitere Einrichtung, beispielsweise eine Wickeleinrichtung, übergeben wird.

Derartige Ballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen.

Die DE-A1-10026066 zeigt eine Vorrichtung zum Umhüllen eines Rundballens mit Hüllmittel mit einer an die Oberfläche des Hüllmittels anlegbaren Bremse mit einem Kontaktelement und einer Stellvorrichtung, wobei die Bremse mittels eines Motors an das Hüllmittel anlegbar ist und eine Steuer- oder Regelvorrichtung vorgesehen ist, die es ermöglicht, Signale von Sensoren z. B. über die abgezogene Menge von Netz oder Folie, die Abzugsgeschwindigkeit und dergleichen zu verwerten und danach den Andrückzeitpunkt und die Andrückkraft festzulegen. Eine derartige Bremse soll während des Wickelns eine Spannung des Hüllmittels bewirken und ein Nachlaufen des Hüllmittels verhindern. Nach einem Abtrennen des Hüllmittels hängt ein freies Ende des Hüllmittels über ein Leitmittel herab, was ein Ergreifen des Hüllmittels durch den Ballen und/oder ein Umhüllung eines Ballens mit einer zumindest im Wesentlichen definierten Menge an Hüllmittel erschwert.

Die der Erfindung zugrunde liegende Aufgabe wird darin gesehen, eine Ballenpresse und ein Verfahren anzugeben, durch welche die vorgenannten Nachteile überwunden werden.

Die Aufgabe wird erfindungsgemäß durch die Lehre der Patentansprüche 1 und 5 gelöst. Weitere vorteilhafte Ausgestaltungen und Weiterbildungen der Erfindung gehen aus den Unteransprüchen hervor.

Die Ballenpresse kann auch im industriellen Bereich, beispielsweise zur Bildung von Ballen aus Papier, Müll, Stoff oder anderen Materialien eingesetzt werden. Es ist darüber hinaus denkbar, dass es sich um eine Presse zur Herstellung von Quaderballen handelt, wie sie sowohl im landwirtschaftlichen als auch im industriellen Bereich Verwendung findet. Eine derartige Umhüllungseinrichtung kann mit jedem bekannten Hüllmaterial, beispielsweise einer Folie oder einem Netz eingesetzt werden. Besonders vorteilhaft ist ihr Einsatz aber dann, wenn ein Hüllmaterial verwendet wird, das bezogen auf seine Längserstreckung in vorzugsweise im Wesentlichen selbsttätig trennbare Abschnitte unterteilt ist, da hier eine genaue Positionierung des Hüllmaterials insbesondere zu Anfang eines Umhüllungsvorgangs dazu beiträgt, dass der Ballen mit einer bestimmten Menge an Hüllmaterial, insbesondere genau einem Abschnitt, umhüllt wird.

Ist ein Bremsmittel vorgesehen, so kann dieses direkt oder indirekt mit dem Hüllmaterial zusammenwirken.

Das Bremsmittel kann an das Hüllmaterial selektiv anlegbar vorgesehen sein, beispielsweise in dem es in der Art eines an das Hüllmittel anlegbaren bzw. von diesem abhebbaren Bremsklotz ausgebildet ist. Vorzugsweise ist aber in der Art einer Walze bzw. Rolle, insbesondere mit einer beschichteten, beispielsweise gummierten, und/oder profilierten Oberfläche ausgebildet. Das Bremsmittel kann aber auch in das Hüllmaterial eingreifen oder an diesem angreifen, um es abzubremsen. Hierzu ist es vorzugsweise in der Art einer Hebeleinrichtung ausgebildet, die entsprechend mit dem Hüllmaterial zusammenwirkt, beispielsweise in dem sie in eine, vorzugsweise in einem Randbereich vorgesehene Aussparung eingreift, um das Hüllmaterial abzubremsen und/oder dessen Position zu bestimmen.

Ist ein Antrieb zur Förderung des Hüllmaterials vorgesehen, so kann dieser eine Förderung des Hüllmaterials selektiv unterbinden und/oder unterbrechen. Ein derartiger Antrieb kann beispielsweise eine Vorratsrolle, auf der das Hüllmaterial aufgewickelt ist, in Rotation versetzen. Hierzu kann der Antrieb die Vorratsrolle direkt antreiben oder aber indirekt auf die Vorratsrolle wirken, in dem er beispielsweise von außen auf die Vorratsrolle bzw. das Hüllmaterial wirkt. So kann beispielsweise vorgesehen sein, dass der Antrieb beispielsweise eine/die Walze bzw. Rolle antreibt, die wiederum an der Vorratsrolle angreift, um diese in Rotation versetzen zu können. Eine derartige Rolle oder Walze kann aber auch vorgesehen sein, um Hüllmaterial von einer Vorratsrolle abzuziehen. Es ist aber auch denkbar, dass der Antrieb eine Zufuhrrolle antreibt, die beispielsweise zusammen mit insbesondere weiteren Pressmitteln den Pressraum der Ballenpresse bestimmt. Der Antrieb kann aber auch in der Art eines insbesondere elektrischen Schrittmotors ausgebildet sein. Es ist aber auch denkbar, dass das Bremsmittel in den Antrieb eingreift, an diesen angreift und/oder diesen abbremst, beispielsweise in dem es auf einen Riemen oder eine Antriebsscheibe eines Riementriebs einwirkt.

Ein Verfahren nach Anspruch 5 kann mit jedem bekannten Hüllmaterial, beispielsweise einer Folie oder einem Netz eingesetzt werden. Besonders vorteilhaft ist sein Einsatz aber dann, wenn ein Hüllmaterial verwendet wird, das bezogen auf seine Längserstreckung in vorzugsweise im Wesentlichen selbsttätig trennbare Abschnitte unterteilt ist, da hier eine genaue Positionierung des Hüllmaterials insbesondere zu Anfang eines Umhüllungsvorgangs dazu beiträgt, dass der Ballen mit einer bestimmten Menge an Hüllmaterial, insbesondere genau einem Abschnitt umhüllt werden kann.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine schematische Seitenansicht einer landwirtschaftlichen Ballenpresse mit Pressmitteln und einer Umhüllungseinrichtung,
- Fig. 2: eine vergrößerte Darstellung der Umhüllungseinrichtung mit einem auf einer Vorratsrolle aufgewickelten Hüllmaterial während der Umhüllung eines Ballens mit Hüllmaterial,
- Fig. 3: eine Darstellung gemäß Figur 2 gegen Ende des Umhüllungsvorgangs, wobei der Ballen bereits vollständig mit Hüllmaterial umwickelt ist,
- Fig. 4: eine Darstellung gemäß den Figuren 2 und 3, wobei sich ein Faltbereich des Hüllmaterials beginnt, sich zu entfalten,
- Fig. 5: eine Darstellung gemäß Figur 4 bei fast vollständig entfaltetem Faltbereich und
- Fig. 6: ein Darstellung eines in einem Zufuhrspalt angeordneten Anfangsbereich des Hüllmaterials.

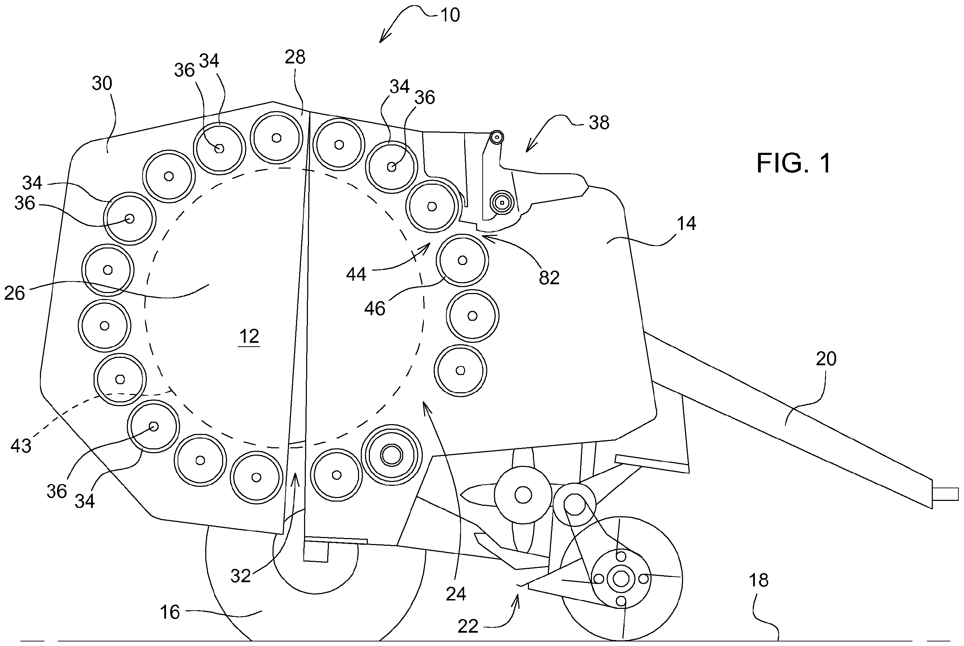

In der Figur 1 der Zeichnung wird eine schematisch dargestellte Ballenpresse 10, in der Art einer landwirtschaftlichen Ballenpresse zum Pressen eines rundzylindrischen Ballens 12 gezeigt, welche einen ersten Gehäuseteil 14 aufweist, der sich mittels Rädern 16 auf einem Untergrund 18 abstützt und die mittels einer Deichsel 20 an ein nicht gezeigtes Zugfahrzeug, z. B. einen Ackerschlepper, anschließbar ist.

An einer bezogen auf eine Vorwärtsfahrtrichtung vorderen, unteren Seite des ersten Gehäuseteils 14 befindet sich in bekannter Weise eine Aufnahmevorrichtung 22 zur Aufnahme und Zufuhr von Erntegut, die geschnittenes Erntegut durch einen Zufuhrkanal 24 in einen Pressraum 26 fördert, wobei der erste Gehäuseteil 14 einen vorderen Teil des Pressraum 26 umgibt. An dem rückwärtigen oberen Eckbereich des ersten Gehäuseteils 14 befindet sich ein Lager 28 für einen schwenkbaren zweiten Gehäuseteil 30, der einen hinteren Teil des Pressraums 26 umgibt. Der zweite Gehäuseteil 30 gibt im geöffneten Zustand eine Öffnung 32 frei, durch welche ein von der Ballenpresse 10 gepresster Ballen 12 abgesetzt bzw. entladen oder ausgeworfen werden kann. Der schwenkbare zweite Gehäuseteil 30 kann mittels Stellmotoren (nicht gezeigt) betätigt werden (geöffnet und geschlossen werden) und stellt somit eine Auslassklappe für einen in dem Pressraum 26 gepressten Ballen 12 dar.

Gemäß dem vorliegenden Ausführungsbeispiel ist der Pressraum 26 der Ballenpresse 10 größenunveränderlich ausgebildet und die Ballenpresse 10 weist eine Vielzahl zueinander parallel verlaufender Pressrollen 34 (exemplarisch wurden hier nur einige wenige Pressrollen 34 mit dem Bezugszeichen 34 versehen), deren Rollachsen 36 bei geschlossenem zweiten Gehäuseteil 24 auf einem Kreisbogen gelegen sind, und von denen wenigstens einige angetrieben sind. Die Pressrollen 34 dienen, neben einem Pressen und einer Formgebung, insbesondere auch einer Rotationserzeugung oder einer Rotationserhaltung des in dem Pressraum 20 angeordneten Rundballens 12. Die Ballenpresse 10 ist hier exemplarisch zur Darstellung der Öffnung 32 mit leicht geöffnetem hinterem Gehäuseteil 30 abgebildet. Während eines Pressvorgangs ist dieser jedoch geschlossen.

Ferner umfasst die Ballenpresse 10 eine Umhüllungseinrichtung 38, die mit einer Vorratsrolle 40 für Hüllmaterial 42 bestückt ist, die das Hüllmaterial 42 dem Pressraum 26 durch einen Zufuhrspalt 44 zuführt. Unmittelbar unterhalb des Zufuhrspalts 44 bzw. an diesen angrenzend ist eine Zufuhrrolle 46 vorgesehen, die abgesehen von ihrer Position, den übrigen Pressrollen 34 gleicht und mit diesen über einen nicht gezeigten Antrieb rotatorisch angetrieben werden kann.

Nachdem der eigentliche Ballenpressvorgang, also die Erntegutaufnahme und Bildung eines Ballens 12 durch die Pressrollen 34 abgeschlossen ist, wird eine Fahrt über den Untergrund 18 unterbrochen, da die Ballenpresse 10 mit dem Ballen 12 gefüllt ist und kein weiteres Erntegut mehr in den Pressraum 26 aufgenommen werden soll bzw. kann. Zu dieser Zeit wird auch die Umhüllungseinrichtung 38 aktiviert, ein sich dem Ballenpressvorgang anschließender Umhüllungsvorgang eingeleitet und das Hüllmaterial 42 von der Vorratsrolle 40 durch den Zufuhrspalt 44 in den Pressraum 26 und an den Ballen 12 herangeführt. Durch eine anhaltende Drehung des sich in dem Pressraum 26 befindlichen Ballens 12 wird das Hüllmaterial 42 derart um den Ballen 12 gewickelt, dass es eine Mantelfläche 43 des Ballens 12 umhüllt. Nachdem der Umhüllungsvorgang abgeschlossen ist, wird der Ballen 12 mittels Öffnen des in der Art einer Auslassklappe wirkenden zweiten Gehäuseteils 30 durch die Öffnung 32 über eine Entladerampe (nicht gezeigt) auf dem Untergrund 18 abgelegt. Sodann wird die Fahrt mit der Ballenpresse 10 wieder aufgenommen und ein neuer Ballenpressvorgang beginnt.

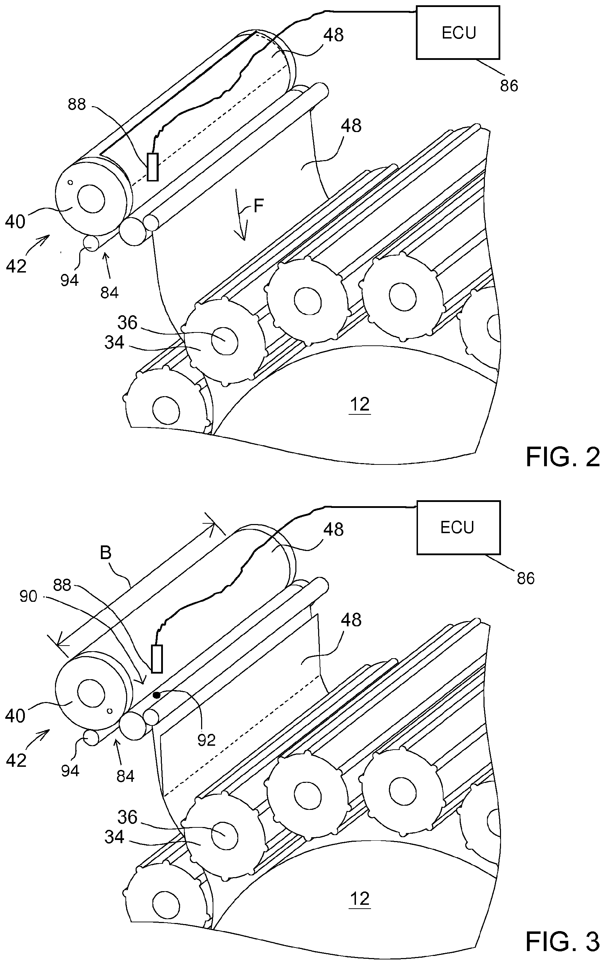

Es wird nun auch auf die Figur 2 bis 5 der Zeichnung Bezug genommen, in der die Umhüllungseinrichtung 38 und das Hüllmaterial 42 in einer vergrößerten Darstellung gezeigt werden. Die Umhüllungseinrichtung 38 ist gemäß dem vorliegenden Ausführungsbeispiel grundsätzlich in bekannter Art und Weise ausgebildet. Das Hüllmaterial 42 wird dem Zufuhrspalt 44 dabei derart zugeführt, dass es durch die angetriebene Zufuhrrolle 46 ergriffen und in Richtung des Ballen 12 gefördert wird. Gemäß dem vorliegenden Ausführungsbeispiel wird das Hüllmaterial 42 zumindest im Wesentlichen von oben an die Zufuhrrolle 46 herangeführt, wodurch es in einfacher Weise von dieser ergriffen und mitgenommen werden kann (siehe Figur 2).

Die Figuren 3 bis 5 zeigen die Umhüllungseinrichtung 38 und das Hüllmaterial 42 nun in aufeinanderfolgenden Phasen eines Umhüllungsvorgang. Gemäß Figur 3 ist der Ballen 12 nun fast vollständig mit Hüllmaterial 42 umhüllt und der Umhüllungsvorgang steht kurz vor dem Abschluss. Mit Blick auf die Vorratsrolle 40 wird deutlich, dass das Hüllmaterial 42 in Längsrichtung derart in Abschnitte 48 unterteilt ist, dass jeweils ein Abschnitt 48 für die Umhüllung eines Ballens 12 genutzt wird, wobei zwischen den Abschnitten 48 Sollrissbereiche 50 vorgesehen sind. Diese Sollrissbereiche 50 sind gemäß dem vorliegenden Ausführungsbeispiel in der Art von sich über die Breite B des Hüllmaterials 42 erstreckende Perforationslinien 52 ausgeführt.

Darüber hinaus weist das Hüllmaterial 42 Faltbereiche 54 und Haftbereiche 56 auf, wobei die Haftbereiche 56 jeweils zwei in der Art von Haft- bzw. Klebestreifen ausgebildete Haftkomponenten 58, 60 aufweisen. Diese Haftkomponenten 58, 60 sind wiederum mittels weiterer, nur andeutungsweise gezeigter Haftkomponenten 62, 64 an dem Hüllmaterial 42 angebracht.

Die Faltbereiche 54 weisen jeweils eine erste, eine zweite und eine dritte Faltkante 66, 68, 70 auf, welche bezogen auf die Förderrichtung F einander nacheilend vorgesehen sind. Die erste Faltkante 66 ist in einem Endbereich 71 eines voreilenden Abschnitts 48, die zweiten Faltkanten 68, 70 sind in einem nacheilenden Abschnitt 48 vorgesehen, wobei der Haftbereich 56 und der Sollrissbereich 50 zwischen der ersten Faltkante 66 und der zweiten Faltkante 68 vorgesehen sind und der Haftbereich 56 dem Sollrissbereich 50 voreilt. Die erste Faltkante 66 und die zweite Faltkante 68 bestimmen darüber hinaus zwischen sich einen ersten Seitenbereich 72 und die zweite Faltkante 68 und die dritte Faltkante 70 einen zweiten Seitenbereich 74.

Ist das Hüllmaterial 42 auf der Vorratsrolle 40 aufgewickelt, so sind die Faltbereiche 52 derart zusammengefaltet, dass der Sollrissbereich 54 sowie der Haftbereich 56 zwischen den Seitenbereiche 72, 74 angeordnet sind, nämlich derart, dass die Haftkomponenten 58, 60 aufeinander zu liegen kommen. Vorzugsweise ist die zweite Haftkomponente 60 als ein silikonartiges Material ausbildet, das an der ersten Haftkomponente 58 in gefaltetem Zustand des Faltbereichs 54 nur derart leicht anhaftet, dass der Faltbereich 54 in einem auf der Vorratsrolle 40 aufgewickelten Zustand von der ersten und zweiten Haftkomponente 58, 60 zusammengehalten wird.

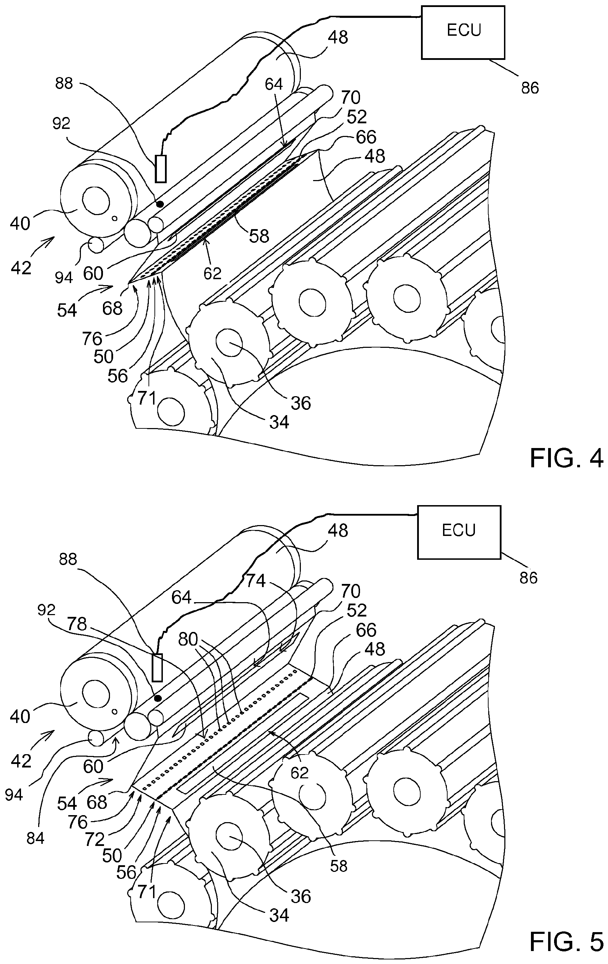

Ist der Ballen 12 vollständig mit Hüllmaterial 42 umwickelt, wie dies in den Figuren 4 und 5 dargestellt ist, so wirkt der rotierende Ballen 12 derart auf das Hüllmaterial 42, dass er auf dieses eine in Förderrichtung F wirkende Kraft auswirkt, welche eine Haftkraft zwischen der ersten und der zweiten Haftkomponente 58, 60 übersteigt und den Faltbereich 54 entfaltet. Die erste Haftkomponente 58 gelangt nun in Anlage mit dem den Ballen 12 umhüllenden Hüllmaterial 42 und geht mit diesem eine fest haftende Verbindung ein.

Die von dem rotierenden Ballen 12 aufgebrachte Kraft wirkt nun auf den Sollrissbereich 50 und trennt die Abschnitte 48 entlang der Perforationslinie 52 voneinander. Der Ballen 12 ist nun mit Hüllmaterial 42 umhüllt und kann aus dem Pressraum 26 abgegeben werden.

Das Hüllmaterial 42 weist darüber hinaus in einem Anfangsbereich 76 eines jeden nacheilenden Abschnitts eine Reihe von Mitnehmern 78 in der Art von im Wesentlichen runden Ausnehmungen 80 auf. Die Mitnehmer 78 erstrecken sich quer über die Breite B des Hüllmaterials 42 und grenzen beabstandet an den bezogen auf die Förderrichtung F voreilenden Sollrissbereich 50 an und sind vor der zweiten Faltkante 68 bzw. zwischen dem voreilenden Sollrissbereich 50 und der zweiten Faltkante 68 vorgesehen.

Durch die Mitnehmer 78 kann das Hüllmaterial 42 bzw. ein Anfangsbereich 72 eines jeden Abschnitts beispielsweise durch den Ballen 12 bzw. durch den Ballen 12 bildendes Material, wie im Falle eines landwirtschaftlichen Ballens beispielsweise durch Halme von Erntegut in der Art von Stroh oder Heu ergriffen werden.

Darüber hinaus kann die Reihe von Ausnehmungen 80 auch in der Art einer Sicherheitseinrichtung für den Fall dienen, dass keine Trennung entlang des Sollrissbereichs 50 erfolgt und/oder der den Ballen 12 umhüllende Abschnitt 48 zu kurz sein sollte. Alternativ kann nun eine Trennung entlang der in Reihe angeordneten Ausnehmungen 80 erfolgen und so einem Umwickeln des Ballens 12 mit einem zweiten Abschnitt 48 vorgebeugt werden.

Weist die Umhüllungseinrichtung 38 eine Zufuhreinrichtung 82 (in Figur 1 andeutungsweise gezeigt) für das Hüllmaterial 42, beispielsweise einen an der Umhüllungseinrichtung 38 schwenkbar vorgesehenen Zufuhrhebel auf, so kann der Zufuhrhebel mit dem Mitnehmer 78 zusammenwirken bzw. insbesondere in eine der oder die Ausnehmung(en) 80 eingreifen, um das Hüllmaterial 42 an die Zufuhrrolle 46 und/oder den Ballen 12 heranzuführen. Ein Zusammenwirken einer derartigen Zufuhreinrichtung 82 mit dem Mitnehmer 78 und insbesondere ein Eingreifen in eine der oder die Ausnehmung(en) 80 kann darüber hinaus die Position des Hüllmaterials 42 und/oder des von dem Zufuhrhebel ergriffenen Abschnitts 48 des Hüllmaterials 42 bezogen auf die Zufuhreinrichtung 82 und damit die Umhüllungseinrichtung 38 bzw. den Ballen 12 bestimmen. Hierdurch kann dazu beigetragen werden, dass das Hüllmaterial 42 und/oder insbesondere der Abschnitt 48 zur Umhüllung des Ballens 12, derart positioniert ist, dass die auf die Zufuhreinrichtung folgende Länge des Abschnitts 48 für jeden Umhüllungsvorgang zumindest im Wesentlichen gleich ist.

Es sei hier angemerkt, dass derartige Mitnehmer 78 auch an konventionellen bzw. bekannten oder an von dem zuvor beschriebenen Hüllmaterial abweichend ausgebildeten Hüllmaterialien, insbesondere an Folien, vorgesehen sein können, bzw. ein zuvor beschriebenes Hüllmaterial 42 nicht notwendigerweise mit derartigen Mitnehmern 78 versehen werden muss.

Es wird nun insbesondere auf die Figuren 2 bis 6 Bezug genommen, in denen eine Bremseinrichtung 84 für ein Hüllmaterial 42 gezeigt wird. Die im folgenden nun genauer beschriebene Bremseinrichtung 84 kann an einer zuvor beschriebenen Umhüllungseinrichtung aber auch an einer konventionellen Umhüllungseinrichtung bzw. Ballenpresse und/oder in Verbindung mit einem zuvor beschriebenen wie auch einem konventionellen Hüllmaterial, beispielsweise einem Netz oder einer Folie, eingesetzt werden.

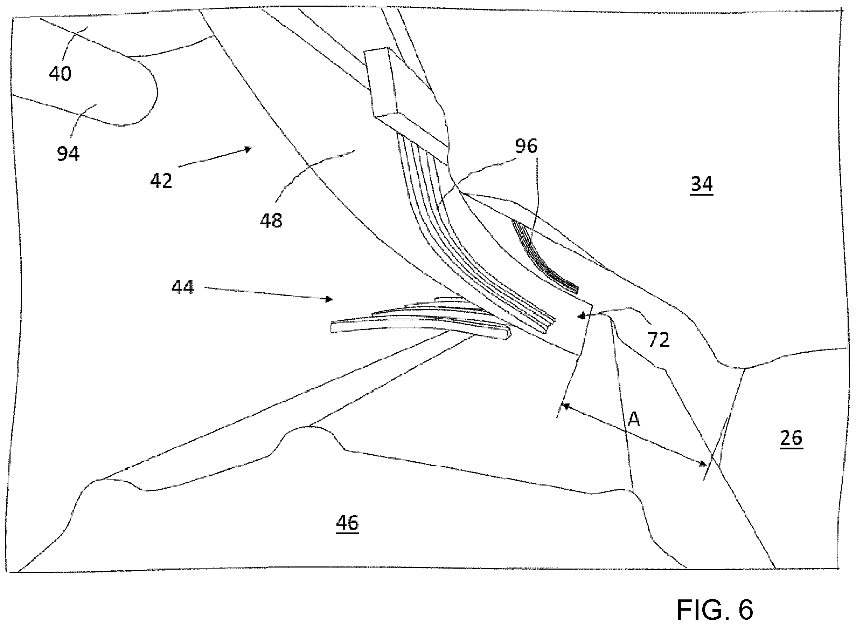

Gemäß dem vorliegenden Ausführungsbeispiel ist die Bremseinrichtung 84 wirksam mit einer Steuer- oder Regeleinrichtung 86 der Ballenpresse 10 verbunden und weist einen Sensor 88, in der Art eines optischen Sensors 88, auf, der aufnehmen kann, ob sich eine in einem Randbereich 90 des Hüllmaterials 42 vorgesehene Markierung 92 in einem Erfassungsbereich des Sensors 88 befindet. Erkennt der Sensor 88, dass eine Markierung 92 in seinem Erfassungsbereich vorhanden ist, überträgt er diese Information an die Steuer- oder Regeleinrichtung 86, die entsprechend die Bremseinrichtung 84 in der Art aktiviert, dass ein Bremsmittel 94 der Bremseinrichtung 84 an das Hüllmaterial 42 angelegt wird, um dieses abzubremsen. Die Markierung 92 ist auf dem Hüllmaterial 42 derart angeordnet, dass sie der Bremseinrichtung 84 anzeigt, das Hüllmaterial 42 abzubremsen, wenn der Anfangsbereich 72 eines dem einen Ballen 10 umhüllenden Abschnitt 48 nacheilenden Abschnitts 48 bzw. sein nach einem Abtrennen des den Ballen 10 umhüllenden Abschnitts 48 entlang des Sollrissbereichs 50 nun freies Ende eine vorbestimmte Position einnimmt (siehe Figur 6).

Insbesondere wird der Abschnitt 48 derart abgebremst, dass sein Anfangsbereich 72 bzw. sein freies Ende derart in dem Zufuhrspalt 44 angeordnet ist, dass ein Abstand A zwischen dem Anfangsbereich 72 und dem Pressraum 26 zu Beginn eines jeden Umhüllungsvorgangs zumindest im Wesentlichen gleich ist. Gemäß der Darstellung in Figur 6 wird das Hüllmaterial 42 bzw. der Anfangsbereich 72 darüber hinaus durch ein für die gewünschte Wirkung der Bremseinrichtung nicht notwendiges Leitmittel 96 in Anlage mit der Zufuhrrolle 44 gehalten.

Auf diese Weise trägt die Bremseinrichtung 84 dazu bei, dass jeder Ballen 10 mit einer zumindest im Wesentlichen gleichen Menge an Hüllmaterial 42 bzw. bei einem zuvor beschriebenen, in Abschnitte 48 unterteilten Hüllmaterial 42 bzw. einem Hüllmaterial 42 mit Sollrissbereichen 50 mit genau einem Abschnitt 48 umhüllt wird bzw. der jeweilige Abschnitt 48 zur Umhüllung eines Ballens passend positioniert wird.

Das Trennen der Abschnitte 48 entlang des Sollrissbereichs 50 kann ohne Zuhilfenahme weiterer Hilfsmittel, insbesondere ohne den Einsatz einer Trenneinrichtung bzw. einer Messeranordnung erfolgen. Darüber hinaus oder auch alternativ kann durch die gezeigte Bremseinrichtung 84 zum Abschluss eines Umhüllungsvorgangs aber eine auf den Sollrissbereich 50 wirkende Kraft erhöht bzw. eine zusätzliche Kraft aufgebracht werden.

## Patentansprüche

1. Landwirtschaftliche Ballenpresse (10) zur Bildung rundzylindrischer Ballen (12) in einem Pressraum (26) der Ballenpresse (10), mit einer Umhüllungseinrichtung (38) zur Umhüllung eines Ballens (12), umfassend Hüllmaterial (42), wobei die Umhüllungseinrichtung (38) eine Bremseinrichtung (84) für das Hüllmaterial (42) umfasst, und die Bremseinrichtung (84) derart ausbildet ist, dass sie bewirkt, dass das Hüllmaterial (84) insbesondere zum Beginn eines Umhüllungsvorgangs, eine zumindest im Wesentlichen vorbestimmte Position einnimmt, wobei die Bremseinrichtung (84) wirksam mit einer Steuer- oder Regeleinrichtung (86) der Ballenpresse (10) verbunden ist und einen Sensor (88) aufweist, **dadurch gekennzeichnet, dass** der Sensor (88) ein optischer Sensor ist, mit dem aufnehmbar ist, ob sich eine in einem Randbereich (90) des Hüllmaterials (42) vorgesehene Markierung (92) in einem Erfassungsbereich des Sensors (88) befindet,
wobei die Markierung (92) auf dem Hüllmaterial (42) derart angeordnet ist, dass die Markierung (92) der Bremseinrichtung (84) anzeigt, das Hüllmaterial (42) abzubremsen, wenn ein Anfangsbereich (72) eines dem einen Ballen (10) umhüllenden Abschnitt (48) nacheilenden Abschnitts (48) bzw. sein nach einem Abtrennen des den Ballen (10) umhüllenden Abschnitts (48) entlang des Sollrissbereichs (50) nun freies Ende die vorbestimmte Position einnimmt,
und der Abschnitt (48) derart abbremsbar ist, dass sein Anfangsbereich (72) bzw. sein freies Ende derart in dem Zufuhrspalt (44) angeordnet ist, dass ein Abstand (A) zwischen dem Anfangsbereich (72) und dem Pressraum (26) zu Beginn eines jeden Umhüllungsvorgangs zumindest im Wesentlichen gleich ist.

2. Ballenpresse nach Anspruch 1, **dadurch gekennzeichnet, dass** wenigstens ein Bremsmittel (94), vorgesehen ist, dass mit dem Hüllmaterial (42) direkt oder indirekt zusammenwirken kann.

3. Ballenpresse nach Anspruch 2, **dadurch gekennzeichnet, dass** das Bremsmittel (94) an des Hüllmaterial (42) selektiv anlegbar vorgesehen ist und/oder selektiv in oder an das Hüllmaterial (42) ein- bzw. angreifen kann und vorzugsweise in der Art einer Walze bzw. Rolle oder einer Hebeleinrichtung ausgebildet ist.

4. Ballenpresse nach einem der vorherigen Ansprüche, **dadurch gekennzeichnet, dass** ein Antrieb zur Förderung des Hüllmaterials (42) vorgesehen ist, der eine Förderung des Hüllmaterial (42) selektiv unterbinden und/oder mit dem Bremsmittel (94) zusammenwirken kann.

5. Verfahren zur Umhüllung eines Ballens (12) mit einem Hüllmaterial (42) mittels einer landwirtschaftlichen Ballenpresse (10) nach einem der vorangehenden Ansprüche, und zur Bildung rundzylindrischer Ballen (12) in einem Pressraum (26) der Ballenpresse (10), wobei
eine Bremseinrichtung (84) der Umhüllungseinrichtung (38) derart auf das Hüllmaterial (42) ein - bzw. mit diesem zusammenwirkt, dass das Hüllmaterial (42) zum Beginn eines Umhüllungsvorgangs eine zumindest im Wesentlichen vorbestimmte Position einnimmt, wobei die Bremseinrichtung (84) wirksam mit einer Steuer- oder Regeleinrichtung (86) der Ballenpresse (10) verbunden ist und einen optischen Sensor (88) aufweist, wobei mit dem optischen Sensor aufgenommen wird, ob sich eine in einem Randbereich (90) des Hüllmaterials (42) vorgesehene Markierung (92) in einem Erfassungsbereich des Sensors (88) befindet,
und wobei die Markierung (92) auf dem Hüllmaterial (42) derart angeordnet ist, dass die Markierung (92) der Bremseinrichtung (84) anzeigt, das Hüllmaterial (42) abzubremsen, wenn ein Anfangsbereich (72) eines dem einen Ballen (10) umhüllenden Abschnitt (48) nacheilenden Abschnitts (48) bzw. sein nach einem Abtrennen des den Ballen (10) umhüllenden Abschnitts (48) entlang des Sollrissbereichs (50) nun freies Ende die vorbestimmte Position einnimmt,
und der Abschnitt (48) derart abgebremst wird, dass sein Anfangsbereich (72) bzw. sein freies Ende derart in dem Zufuhrspalt (44) angeordnet ist, dass ein Abstand (A) zwischen dem Anfangsbereich (72) und dem Pressraum (26) zu Beginn eines jeden Umhüllungsvorgangs zumindest im Wesentlichen gleich ist.

## Claims

1. Agricultural baler (10) for forming round-cylindrical bales (12) in a pressing chamber (26) of the baler (10), having a wrapping device (38) for wrapping a bale (12), comprising wrapping material (42), wherein the wrapping device (38) comprises a braking device (84) for the wrapping material (42) and the braking device (84) is configured such that it causes the wrapping material (84), in particular at the start of a wrapping operation, to take up an at least substantially predetermined position, wherein the braking device (84) is operatively connected to an open-loop or closed-loop control device (86) of the baler (10) and has a sensor (88), **characterized in that** the sensor (88) is an optical sensor with which it is possible to register whether a marking (92) provided in a peripheral region (90) of the wrapping material (42) is located in a sensing region of the sensor (88), wherein the marking (92) is arranged on the wrapping material (42) such that the marking (92) indicates to the braking device (84) that it needs to brake the wrapping material (42) when a starting region (72) of a portion (48) trailing the portion (48) wrapping a bale (10), or its end that is now free after the portion (48) wrapping the bale (10) has been severed along the predetermined tearing region (50), takes up the predetermined position, and the portion (48) is able to be braked such that its starting region (72), or its free end, is arranged in the feed gap (44) such that a spacing (A) between the starting region (72) and the pressing chamber (26) is at least substantially identical at the start of each wrapping operation.

2. Baler according to Claim 1, **characterized in that** at least one braking means (94) is provided, which can interact directly or indirectly with the wrapping material (42).

3. Baler according to Claim 2, **characterized in that** the braking means (94) is intended to be placeable selectively against the wrapping material (42) and/or can selectively engage in or act on the wrapping material (42), and is configured preferably in the manner of a roller or roll or of a lever device.

4. Baler according to one of the preceding claims, **characterized in that** a drive for delivering the wrapping material (42) is provided, said drive being able to selectively prevent delivery of the wrapping material (42) and/or to interact with the braking means (94).

5. Method for wrapping a bale (12) with a wrapping material (42) by means of an agricultural baler (10) according to one of the preceding claims, and for forming round-cylindrical bales (12) in a pressing chamber (26) of the baler (10), wherein a braking device (84) of the wrapping device (38) acts on the wrapping material (42) or interacts therewith such that the wrapping material (42), at the start of a wrapping operation, takes up an at least substantially predetermined position, wherein the braking device (84) is operatively connected to an open-loop or closed-loop control device (86) of the baler (10) and has an optical sensor (88), wherein the optical sensor is used to register whether a marking (92) provided in a peripheral region (90) of the wrapping material (42) is in a sensing region of the sensor (88), and wherein the marking (92) is arranged on the wrapping material (42) such that the marking (92) indicates to the braking device (84) that it needs to brake the wrapping material (42) when a starting region (72) of a portion (48) trailing the portion (48) wrapping a bale (10), or its end that is now free after the portion (48) wrapping the bale (10) has been severed along the predetermined tearing region (50), takes up the predetermined position, and the portion (48) is able to be braked such that its starting region (72), or its free end, is arranged in the feed gap (44) such that a spacing (A) between the starting region (72) and the pressing chamber (26) is at least substantially identical at the start of each wrapping operation.

## Revendications

1. Presse à balles agricole (10) permettant de former des balles cylindriques rondes (12) dans une chambre de presse (26) de la presse à balles (10), comprenant un dispositif d'enrubannage (38) pour enrubanner une balle (12), et comprenant un matériau d'enrubannage (42), le dispositif d'enrubannage (38) comprenant un dispositif de freinage (84) pour le matériau d'enrubannage (42), et le dispositif de freinage (84) étant réalisé de telle sorte qu'il amène le matériau d'enrubannage (84), en particulier au début d'un processus d'enrubannage, à occuper une position au moins substantiellement prédéterminée, le dispositif de freinage (84) étant relié de manière fonctionnelle à un dispositif de commande ou de régulation (86) de la presse à balles (10) et présentant un capteur (88),
**caractérisée en ce que** le capteur (88) est un capteur optique qui permet d'enregistrer si un repère (92) prévu dans une zone marginale (90) du matériau d'enrubannage (42) se trouve dans une zone de détection du capteur (88), dans laquelle le repère (92) est disposé sur le matériau d'enrubannage (42) de telle sorte que le repère (92) indique au dispositif de freinage (84) de freiner le matériau d'enrubannage (42) si une zone initiale (72) d'une partie (48) suivant une partie (48) enrubannant une balle (10) ou son extrémité désormais libre après une séparation de la partie (48) enrubannant la balle (10) le long de la zone destinée à la rupture (50) occupe la position prédéterminée, et la partie (48) peut être freinée de telle sorte que sa zone initiale (72) ou son extrémité libre est disposée dans la fente d'alimentation (44) de telle sorte qu'une distance (A) entre la zone initiale (72) et la chambre de presse (26) est au moins substantiellement identique au début de chaque processus d'enrubannage.

2. Presse à balles selon la revendication 1, **caractérisée en ce qu'**au moins un moyen de freinage (94) est prévu qui peut coopérer directement ou indirectement avec le matériau d'enrubannage (42).

3. Presse à balles selon la revendication 2, **caractérisée en ce que** le moyen de freinage (94) est prévu de manière à pouvoir être appliqué sélectivement au matériau d'enrubannage (42) et/ou peut venir en prise avec ou attaquer au matériau d'enrubannage (42), et est de préférence réalisé à la manière d'un cylindre ou d'un rouleau ou d'un dispositif à levier.

4. Presse à balles selon l'une quelconque des revendications précédentes, **caractérisée en ce qu'**un dispositif d'entraînement pour transporter le matériau d'enrubannage (42) est prévu qui peut interdire sélectivement un transport du matériau d'enrubannage (42) et/ou peut coopérer avec le moyen de freinage (94) .

5. Procédé permettant d'enrubanner une balle (12) avec un matériau d'enrubannage (42) au moyen d'une presse à balles agricole (10) selon l'une quelconque des revendications précédentes, et de former des balles cylindriques rondes (12) dans une chambre de presse (26) de la presse à balles (10), dans laquelle un dispositif de freinage (84) du dispositif d'enrubannage (38) agit sur ou coopère avec le matériau d'enrubannage (42) de telle sorte que le matériau d'enrubannage (42) occupe au début d'un processus d'enrubannage une position au moins substantiellement prédéfinie, le dispositif de freinage (84) étant relié de manière fonctionnelle à un dispositif de commande ou de régulation (86) de la presse à balles (10) et présentant un capteur optique (88), le capteur optique enregistrant si un repère (92) prévu dans une zone marginale (90) du matériau d'enrubannage (42) se trouve dans une zone de détection du capteur (88), et le repère (92) étant disposé sur le matériau d'enrubannage (42) de telle sorte que le repère (92) indique au dispositif de freinage (84) de freiner le matériau d'enrubannage (42) si une zone initiale (72) d'une partie (48) suivant une partie (48) enrubannant une balle (10) ou son extrémité désormais libre après une séparation de la partie (48) enrubannant la balle (10) le long de la zone destinée à la rupture (50) occupe la position prédéterminée, et la partie (48) est freinée de telle sorte que sa zone initiale (72) ou son extrémité libre est disposée dans la fente d'alimentation (44) de telle sorte qu'une distance (A) entre la zone initiale (72) et la chambre de presse (26) est au moins substantiellement identique au début de chaque processus d'enrubannage.
